(19) Europäisches Patentamt
European Patent Office
Office européen des brevets

(11) Numéro de publication: **0 011 532**
**B1**

(12) **FASCICULE DE BREVET EUROPEEN**

(45) Date de publication du fascicule de brevet: **25.11.81**

(21) Numéro de dépôt: **79400781.5**

(22) Date de dépôt: **23.10.79**

(51) Int. Cl.³: **C 08 F 2/38,** D 06 M 13/26, D 06 M 15/32, D 06 M 15/38, C 08 G 65/32

(54) **Produits fluorés destinés aux traitements oléofuges et hydrofuges de substrats divers et procédé pour leur préparation.**

(30) Priorité: **14.11.78 FR 7832087**

(43) Date de publication de la demande: **28.05.80 Bulletin 80/11**

(45) Mention de la délivrance du brevet: **25.11.81 Bulletin 81/47**

(84) Etats Contractants Désignés: **BE CH DE FR GB IT NL**

(56) Documents cités: **FR - A - 2 328 070**

(73) Titulaire: **P C U K PRODUITS CHIMIQUES UGINE KUHLMANN**
**Service Propriété Industrielle Tour Manhattan**
**F-92087 PARIS LA DEFENSE 2 Cédex 21 (FR)**

(72) Inventeur: **Perronin, Jean**
**3 Résidence Normandie**
**Apremont, F-60300 Senlis (FR)**
Inventeur: **Dessaint, André Louis**
**17 B rue des Raques**
**F-60600 Clermont (FR)**

(74) Mandataire: **Houssin, Jean et al,**
**PRODUITS CHIMIQUES UGINE KUHLMANN**
**Service Propriété Industrielle Tour Manhattan**
**Cedex 21**
**F-92087 Paris La Defense 2 (FR)**

**EP 0 011 532 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Produits fluorés destinés aux traitements oléofuges et hydrofuges de substrats divers et procédé pour leur préparation

La présente invention concerne de nouveaux produits fluorés, leur fabrication et leur application pour le traitement oléofuge et hydrofuge de substrats les plus divers tels que textiles, tissus non tissés, cuir, bois, métaux, béton et plus particulièrement papiers, cartons et matériaux similaires.

Le traitement oléofuge et hydrofuge, en conférant à ces substrats des propriétés répulsives vis-à-vis de certaines substances, permet de réduire par exemple la pénétration des huiles, des graisses et de certains solvants organiques, donne à ces substrats des qualités d'antiadhérence et/ou permet de réaliser des revêtements protecteurs. Cette propriété de surface peut être mise à profit pour conférer à ces substrats des propriétés antistatiques, une plus grande facilité au nettoyage ou une certaine résistance à la corrosion et aux attaques chimiques ou atmosphériques.

Pour obtenir ces propriétés, certains dérivés fluorés ont déjà été proposés par exemple dans les brevets français 2 155 133, 2 175 332 et les demandes de brevet français 75 23898 et 75 31794 déposés par la demanderesse. Cependant, il s'est avéré que la plupart de ces produits, bien qu'ayant des propriétés intéressantes sur textiles et sur cuir, nécessitent lors de leur application sur papier ou carton, soit l'utilisation d'un taux trop important de matières actives (en l'occurrence, le taux de fluor lié au carbone) pour obtenir des performances économiquement acceptables, soit des conditions d'application ou des traitements thermiques peu compatibles avec ceux qui sont généralement utilisés dans l'industrie des papiers et cartons.

Plus spécialement adaptés aux papiers, des dérivés fluorés à base de complexe de chrome et solubles dans l'eau ont été proposés dans les brevets français 1 172 664, 2 022 351 et le brevet américain 3 907 576. Ces produits confèrent effectivement aux papiers et cartons des propriétés oléophobes intéressantes mais, ils ont l'inconvénient d'être colorés en vert ed de communiquer cette couleur aux substrats ainsi traités.

D'autres dérivés fluorés non colorés comportant généralement des groupements terminaux phosphorés, amidés ou aminés ont été proposés, pour des utilisations papetières, dans les brevets français 1 305 612, 1 388 621, 2 055 551, 2 057 793, 2 014 893, 2 037 675, 2 038 912 et le brevet américain 3 817 958. Malheureusement, ces produits nécessitent des doses élevées de fluor pour obtenir de bonnes performances et sont souvent très sensibles aux cations polyvalents fréquemment utilisés dans les traitements des pâtes à papier ou des papiers eux-mêmes. En outre, ils ont peu ou pas solubles dans l'eau, ne résistent pas suffisamment aux pliages et aux calandrages et ont également le défaut de conférer aux papiers des propriétés trop hydrophiles qui atténuent l'efficacité des agents de collage et par voie de conséquence diminuent le taux de collage et même l'aptitude à l'écriture et à l'impression.

Il a maintenant été trouvé, dans les services de la demanderesse, de nouveaux produits fluorés qui, appliqués sur divers substrats et plus spécialement sur papiers et cartons, leur confèrent, avec un faible taux de fluor déposé, un caractère à la fois hydrophobe et oléophobe, de façon telle qu'ils s'opposent à l'étalement et à la pénétration des liquides d'origine aqueuse ou huileuse, des graisses, de nombreux solvants organiques et même de produits à caractère acide ou basique. Grâce à leur bonne solubilité ces produits s'appliquent facilement en milieu aqueux et en présence d'électrolytes. Enfin, les papiers et cartons ainsi traités conservent leurs performances aux pliages et aux calandrages, ont un bon taux de collage et sont adaptés à l'écriture et à l'impression.

Les nouveaux produits fluorés selon l'invention résultent de la réaction de:

(a) une molécule d'un ou plusieurs acides de formule:

$$HS—A—(COOH)_n \qquad (I)$$

et de

(b) une à cinq molécules d'un ou plusieurs composés possédant au moins une liaison éthylènique, l'un au moins de ces composés répondant à la formule:

$$\begin{array}{c} Rf—B—\underset{\displaystyle R}{\underset{|}{C}}=CH—R \end{array} \qquad (II)$$

et éventuellement d'une neutralisation ou d'une neutralisation partielle, avec une base minérale ou organique.

Dans les formules (I) et (II), A représente un radical hydrocarboné aliphatique ou aromatique, n est un nombre entier allant de 1 à 4, Rf représente un chaîne perfluorée, droite ou ramifiée, contenant 1 à 20, de préférence 2 à 14 atomes de carbone, B représente un enchaînement bivalent éventuellement ramifié et pouvant comporter des atomes de soufre, d'oxygène ou d'azote, l'un des symboles R représente un atome d'hydrogène et l'autre un atome d'hydrogène ou un groupe alkyle contenant 1 à 4 atomes de carbone.

Les produits selon l'invention peuvent être préparés par télomérisation ou cotélomérisation en

milieu solvant ou non, l'acide défini sous (a) jouant le rôle de télogène et les composés éthyléniques définis sous (b) jouant le rôle de taxogéne. On peut opérer en présence de catalyseurs ioniques (cationiques ou anioniques) tels que le trifluorure de bore, le chlorurue d'aluminium et le méthylate de sodium, mais préférentiellement en présence de catalyseurs radicalaires, tels que des composés peroxygénés comme le persulfate de sodium, d'ammonium ou de potassium, les perborates alcalins, l'eau oxygénée, le perborate de tert-butyle, le peroxyde de diacétyle, le perpivalate de tert-butyle, l'acide peracétique, les oxydes d'amines, le nitrate cérique et d'ammonium, des composés azo comme l'azo-2,2'bis-isobutyronitrile, l'azo-2,2'bis-(diméthyl-2,4 méthoxy-4 valéronitrile), l'acide azo-4,4'bis-(cyano-4 pentanoïque) ou ses sels alcalins, l'azo dicarbonamide, le dichlorhydrate d'azo-2,2' di-isobutylamidine ou des photo-initiateurs utilisés en présence de rayonnements U V comme les dérivés de benzoïne, la benzophénone, la méthyl-2 anthraquinone et le benzile. La quantité de catalyseur à mettre en oeuvre peut varier entre 0,01 et 5% par rapport au poids des composés éthyléniques engagés et de préférence de 0,1 à 1,5%.

Les produits selon l'invention peuvent encore être préparés selon des preocédés connus en soi, par condensation en présence ou non de catalyseurs basiques comme le sodium, le méthylate de sodium, l'hydroxyde de sodium ou de potassium, la pipéridine, l'hydroxyde de benzyltriméthyl-ammonium, la pyridine, la N-méthylmorpholine, la triéthylène diamine et la triéthylamine.

Les réactions de télomérisation ou de condensation sont généralement effectuées à un pH de 2 à 11 et à une température comprise entre 40 et 120°C, de préférence entre 50 et 90°C. Il est cependant possible d'opérer à ces températures plus élevées ou plus basses. Par exemple, l'emploi de catalyseurs rédox, comme les systèmes persulfate — sel ferreux, persulfate — hydroxy méthane sulfinate de sodium, eau oxygénée — bisulfite, eau oxygénée-butanedione-2,3, perpivalate de tert-butyle — octoate de cobalt, peroxyde de lauroyle — acétylacétone ou péroxyde de benzoyle — hydrazine peut être utile pour activer la réaction ou abaisser la température de télomérisation. Enfin, à condition d'employer un appareillage adéquat, on peut opérer de manière discontinue, continue ou graduelle.

D'une façon générale, ces différentes réactions sont connues et décrites, par exemple, dans les références suivantes:

— "Monomeric Acrylic Esters" par H. RIDDLE, Reinhold Publishing Corp. (1965) pages 149 à 151.
— G. NAGY "L'industrie chimique" — n° 570 — Janv. 1965 — pages 1 à 6.
— R. B. Fox and DE FIELD, U.S. Naval Research Laboratory — Washington — N R L Report 5190 — 19 Nov. 1958.
— M. S. KARASCH and C. F. FOCUS — Jour. Org. Chem. *13*, 1948, pages 97 à 100.

Les acides définis sous (a) à utiliser pour la préparation des produits selon l'invention peuvent être un acide de formule (I), de préférence l'acide thioglycolique, ou un mélange d'acides de formule (I). Se sont révélés également intéressants des acides tels que l'acide mercapto-3 propionique, l'acide mercapto-4 butyrique, l'acide thiolactique, l'acide thiomalique ou l'acide thiosalicylique.

Comme composés éthylèniques polyfluorés de formule (II), on utilise de préférence ceux répondant à la formule:

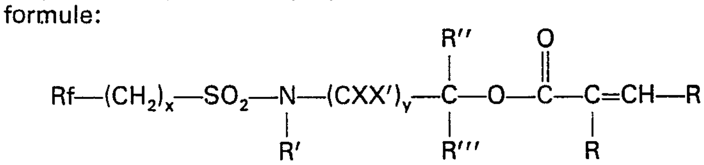 (III)

dans laquelle R et Rf sont tels que définis ci-dessus, x représente un nombre entier allant de 1 à 20, de préférence à 2 ou 4, y représente un nombre entier allant de 1 à 4, de préférence égal à 1 ou 2, R' représente un atome d'hydrogène ou un groupe alkyle contenant 1 à 10 atomes de carbone, cycloalkyle contenant 5 à 12 atomes de carbone, hydroxyalkyle contenant 2 à 4 atomes de carbone ou aryle éventuellement substitué par un radical alkyle contenant 1 à 6 atomes de carbone, R'', R''', X et X' peuvent être identiques ou différents et représentent des atomes d'hydrogène ou des groupes alkyle contenant 1 à 4 atomes de carbone.

Ces monomères polyfluorés de formule (III) peuvent être préparés suivant des procédés connus, par exemple, par estérification des alcools correspondants de formule:

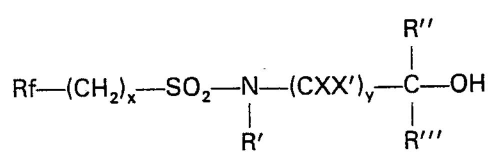 (IV)

décrits dans le brevet français 2 034 142, au moyen d'un acide alcène-monocarboxylique de formule:

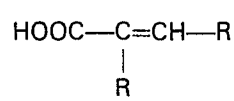 (V)

tel que les acides acrylique, méthacrylique ou crotonique, en présence de catalyseurs acides comme l'acide sulfurique ou l'acide p-toluène-sulfonique. On peut aussi utiliser les anhydrides ou les halogénures des acides de formule (V).

Comme autres exemples de composés éthyléniques polyfluorés de formule (II), on peut citer:

1°) les esters des acides de formule (V) avec les alcools et les thiols de formule:

(VI) $Rf—OH$

(VII) $Rf—(CXX')_x—OH$

(VIII) $Rf—(CXX')_x—(O—C_2H_2XX')_zOH$

(IX) $Rf—(CXX')_x—O—(CXX')_y—OH$

(X) $Rf—(CXX')_x—S—(CXX')_y—OH$

(XI) $Rf—(CXX')_x—SH$

(XII) $Rf—(CXX')_x—SO_2—(CXX')_y—OH$

(XIII) $Rf—SO_2—(CXX')_x—OH$

(XIV) $Rf—CH{=}CH—CH_2—(O—C_2H_2XX')_z—OH$

(XV) $Rf—CH{=}CH—(CXX')_x—OH$

(XVI) $Rf—CF{=}CH—CH{=}CH—(O—C_2H_2XX')_z—OH$

(XVII) $Rf—SO_2—N—(CXX')_x—OH$
$\qquad\qquad\quad |$
$\qquad\qquad\quad R'$

$\qquad\qquad\qquad\qquad\qquad\qquad R''$
$\qquad\qquad\qquad\qquad\qquad\qquad |$
(XVIII) $Rf—SO_2—N—(CXX')_x—C—OH$
$\qquad\qquad\quad |\qquad\qquad\qquad |$
$\qquad\qquad\quad R'\qquad\qquad\quad R'''$

(XIX) $Rf—CO_2—(CXX')_x—OH$

(XX) $Rf—CO—(CXX')_xOH$

(XXI) $Rf—CO—N—(CXX')_x—OH$
$\qquad\qquad\quad |$
$\qquad\qquad\quad R'$

2°) les monomères de formule:

(XXII) $Rf—SO_2—(CXX')_x—C{=}CH_2$
$\qquad\qquad\qquad\qquad\qquad |$
$\qquad\qquad\qquad\qquad\qquad R$

(XXIII) $Rf—O—CH{=}CH_2$

(XXIV) $Rf—CO_2—(CXX')_x—C{=}CH_2$
$\qquad\qquad\qquad\qquad\qquad |$
$\qquad\qquad\qquad\qquad\qquad R$

(XXVI) $Rf—(CH_2)_x—N—CO—C{=}CH_2$
$\qquad\qquad\qquad\quad |\qquad\quad |$
$\qquad\qquad\qquad\quad R'\qquad\ R$

(XXVII) $Rf—SO_2—N—CO—C{=}CH_2$
$\qquad\qquad\quad |\qquad\quad |$
$\qquad\qquad\quad R'\qquad\ R$

(XXVIII) 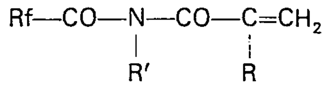

(XXIX) 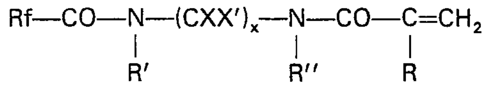

(XXX) 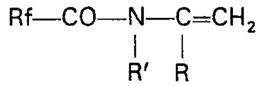

Dans les formules (VI) à (XXX), x, y, Rf, R, R', R'', R''', X, X', ont les mêmes significations que ci-dessus et z est un nombre entier allant de 1 à 10.

Comme composés monomères ou taxogènes, dépourvus de groupes perfluorés, qui possèdent au moins une liaison éthylénique et peuvent être utilisés en mélange avec les composés de formule (II) on peut citer, par exemple:

— Les hydrocarbures oléfiniques inférieurs, halogénés ou non, tels que l'éthylène, le propylène, l'isobutène, le chloro-3 isobutène-1, le butadiène, l'isoprène, les chloro et dichloro-butadiènes, les fluoro et difluoro-butadiènes, le diméthyl-2,5 hexadiène-1,5, le diisobutylène.
— Les halogénures de vinyle, d'allyle ou de vinylidène tels que le chlorure de vinyle ou de vinylidène, le fluorure de vinyle ou de vinylidène, le bromure d'allyle, le chlorure de méthallyle.
— Le styrène et ses dérivés, tels que le vinyl-toluène, l'$\alpha$-méthyl styrène, l'$\alpha$-cyanométhyl styrène, le divinyl benzène, le N-vinyl carbazole.
— Les esters vinyliques tels que l'acétate de vinyle, le propionate de vinyle, les esters vinyliques des acides connus sur le marché sous le nom de "Versatic acids", l'isobutyrate de vinyle, le sénécioate de vinyle, le succinate de vinyle, l'isodécanoate de vinyle, le stérate de vinyle, le carbonate de divinyle.
— Les esters d'allyle comme l'acétate d'allyle et l'heptanoate d'allyle.
— Les éthers alkyl-vinyliques ou alkyl-allyliques, halogénés ou non, tels que le cétyl vinyl éther, le dodécyl vinyl éther, l'isobutyl vinyl éther, l'éthyl vinyl éther, le chloro-2 vinyl éther, le tétra allyloxy éthane.
— Les vinyl alkyl cétones comme la vinyl méthyl cétone.
— Les acides insaturés, tels que les acides acrylique, méthacrylique, $\alpha$ chloro-acrylique, crotonique, maléïque, fumarique, itaconique, citraconique et sénécioïque, leurs anhydrides et leurs esters comme les acrylates et méthacrylates de vinyle, d'allyle, de méthyle, de butyle, d'isobutyle, d'hexyle, d'heptyle, d'éthyl-2 hexyle, de cyclohexyle, de lauryle, de stéaryle ou de cellosolve, le maléate de diméthyle, le crotonate d'éthyle, le maléate acide de méthyle, l'itaconate acide de butyle, les diacrylates et diméthacrylates de glycol ou de polyalkylène glycol, comme le diméthacrylate d'éthylène glycol ou de triéthylène glycol, les acrylates et méthacrylates de dichlorophosphato alkyle comme le méthacrylate de dichloro phosphato éthyle, ainsi que le phosphate acide de bis (méthacryloyloxy éthyle).
— L'acrylonitrile, le méthacrylonitrile, le chloro-2 acrylonitrile, l'acrylate de cyano-2 éthyle, le méthylène glutaronitrile, le cyanure de vinylidène, les cyano acrylates d'alkyle comme le cyano acrylate d'isopropyle, la vinyl pyrrolidone, la trisacryloyl hexahydro-s-triazine, le vinyl trichlorosilane, le vinyl triméthoxysilane, le vinyl triéthoxysilane.

On peut également utiliser en mélange avec les composés de formule (II) des monomères ou taxogènes qui possèdent au moins une liaison éthylénique et au moins un groupe réactif, c'est-à-dire un groupe capable de réagir avec un autre monomère ou taxogène, un autre composé ou le substrat lui-même, pour établir une réticulation. Ces groupes réactifs sont bien connus et peuvent être des groupes polaires ou des groupes fonctionnels, comme les groupes OH, $NH_2$, NH-alkyl, COOMe (Me = métal alcalin ou alcalino terreux), $SO_3H$,

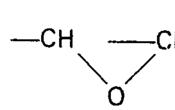, CHO, 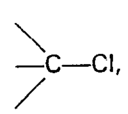, 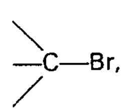, $—SO_2—CH=CH_2$, $—NH—CO—CH=CH_2$, etc. . .

Comme monomères de ce type on peut citer les acrylates et méthacrylates hydroxy alkyliques comme le monoacrylate d'éthylène glycol, le mono méthacrylate de propylène glycol, les acrylates et méthacrylates de polyalkylène glycols, l'alcool allylique, l'allyl glycolate, l'isobutène-diol, l'allyloxy éthanol, l'o.allyl phénol, le divinyl carbinol, le glycérol $\alpha$ allyléther, l'acrylamide, la méthacrylamide, les maléamide et maléïmide, la N-(cyanoéthyl) acrylamide, la N-isopropyl-acrylamide, la diacétone acrylamide, les N-(hydroxyméthyl)acrylamide et méthacrylamide,

N-(alcoxyméthyl) acrylamides et méthacrylamides, le glyoxal bis-acrylamide, l'acrylate ou méthacrylate de sodium, les acides vinyl sulfonique et styrène p.sulfonique et leurs sels alcalins, l'amino-3 crotononitrile, la monoallyl amine, les vinyl pyridines, l'acrylate ou méthacrylate de glycidyle, l'allyl glycidyl éther, les acrylates ou méthacrylate d'alkyl amino alkyl comme le méthacrylate de diméthyl amino éthyle, l'acroléïne.

Comme agents basiques destinés à neutraliser partiellement ou complètement les produits de la réaction des acides de formule (I) avec les composés de formule (II), on peut utiliser les bases minérales ou organiques telles que l'ammoniaque, l'hydroxyde de sodium, l'hydroxyde de calcium, l'hydroxyde d'aluminium ou des composés tels que la triéthylamine, la morpholine, la N-méthyl morpholine, l'éthyène diamine, l'hydrazine, la pyridine, la picoline, ou des amino alcools tels que le diméthylamino éthanol, l'amino-2 méthyl-2 propanol-1, les mono et diéthanolamines N-substituées ou non, la triéthanolamine.

Les nouveaux produits selon l'invention peuvent être préparés en présence ou non de solvants, tels que, par exemple, l'eau, l'acétone, la méthyl éthyl cétone, la méthyl isobutyl cétone, la γ-butyrolactone, la méthyl cyclohexanone, la N-méthyl pyrrolidone-2, le méthanol, l'isopropanol, l'éthylène glycol, le diacétone alcool, le phényl méthyl carbinol, l'isophorone, les dialkyl et/ou aryl éthers comme le diisopropyléther ou l'anisol, le tétrahydrofurane, le dioxane, le diméthoxy-1,2 éthane, l'acide acétique, l'acide lactique, l'acétate d'éthyle, l'acétate de glycol, le salicylate de glycol, le diméthyl phtalate, l'éthylène ou polyéthylène glycol monométhyl ou monoalkyl éther, l'éthylène ou polyéthylène glycol, le diméthyl ou dialkyl éther, le carbonate d'éthylène glycol, le formamide, le diméthylformamide, le diméthylacétamide, le tétraméthylurée, la N,N,N',N'-tétraméthyl éthylène diamine, l'acétonitrile, le butyronitrile, le thio-3,3' dipropionitrile, le diméthylsulfoxide, le sulfolane, l'hexaméthyl phosphorotriamide, le N-oxyde de pyridine, de picoline-2 ou de triméthylamine, le toluène, le méthyl cyclohexane, le trifluoro toluène, le trichloro trifluoro éthane, l'hexafluoro xylène, la pyridine, le nitro méthane, le caprolactame.

Sans que cela soit nécessaire, on peut également préparer les nouveaux produits selon l'invention en présence d'agents tensio-actifs, fluorés ou non, anioniques, non ioniques, cationiques ou amphotères ou d'un mélange de tels agents. On peut également employer des colloïdes tels que l'alcool polyvinylique, la carboxyméthyl cellulose, la méthyl cellulose, l'hydroxyéthyl cellulose, l'alginate de sodium, les polymères ou copolymères acryliques ou méthacryliques et leurs sels solubles dans l'eau, les copolymères styrène — anhydride maléïque, diisobutylène — anhydride maléïque, éthylène — anhydride maléïque, alkyl vinyl éther — anhydride maléïque ou leurs sels.

On peut enfin ajouter d'autres ingrédients, bien connus dans la technique de la polymérisation ou de la télomérisation tels que agents chélatants, tampons, sels d'acides minéraux ou organiques, adjuvants susceptibles de régler le pH et le poids moléculaire, agents hydrotropes, stabilisants.

Les produits selon l'invention ont des degrés de polymérisation très bas et par conséquent des poids moléculaires relativement bas. Ils se présentent d'une façon générale, sous forme de liquides, de pâtes ou de cires et ne sont pas ou peu consistants. Ils peuvent d'autre part se présenter, en solution ou non, sous forme de dispersion, ou même dans un milieu émulsionnable ou auto-émulsionnable.

Le taux de matières sèches des nouvelles compositions selon l'invention peut varier dans de très larges limites. Il est cependant avantageux d'utiliser des produits dont le taux de matières sèches est compris entre 20 et 80% en poids.

Comme substrats susceptibles d'être rendus oléophobes et hydrophobes, avec les produits selon l'invention, on peut citer principalement les papiers, les cartons et les matériaux assimilés. On peut citer également d'autre matériaux très divers tels que par exemple les articles tissés ou non tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, la maçonnerie, les surfaces peintes.

Dans le cas des papiers et cartons, les produits selon l'invention sont appliqués sous forme de solutions ou de dispersions, principalement en milieu aqueux, mais aussi éventuellement en milieu solvant ou dans un mélange d'eau et de solvants, suivant des techniques connues, par exemple, par enduction, impregnation, immersion, pulvérisation, brossage, foulardage, couchage. Les articles ainsi traités peuvent subir un séchage et éventuellement un traitement thermique à une température comprise, par exemple, entre 60° et 230°C. A cet égard, il a été surprenant de trouver que les produits selon l'invention conduisent, sur papier et carton, à l'obtention de bonnes performances même par un simple séchage à la température ambiante. En outre, il a été constaté de façon inattendue, que les produits selon l'invention pouvaient conférer aux papiers et cartons les propriétés oléophobes et hydrophobes en appliquant ceux-ci à l'aide de bain aqueux soit superficiellement sur des substrats déjà terminés, soit dans la masse c'est-à-dire dans la pâte à papier ou dans la pulpe, avant ou pendant l'opération de collage, et ceci sans nuire au taux de collage ou à l'imprimabilité ultérieure.

Pour obtenir une bonne fixation des compositions contenant des produits selon l'invention, sur les substrats sur lesquels elles sont appliquées et pour leur conférer en plus un effet particulier, il est parfois avantageux de les associer avec certains adjuvants, polymères, produits thermo-condensables et catalyseurs susceptibles de favoriser leur réticulation avec le support. Comme tels, on peut citer les

condensats ou précondensats d'urée ou de mélamine formol, la méthylol dihydroxyéthylène urée et ses dérivés, les urones, les méthylol-éthylène-urées, les méthylol-propylène-urées, les méthylol-triazones, les condensats de dicyandiamide-formol, les méthylol-carbamates, les méthylol-acrylamides ou méthacrylamides, leurs polymères ou copolymères, la divinyl sulfone, les polyamides, les dérivés époxy comme le diglycidyl glycérol, les halogénures d'époxypropyl trialkyl (aryl) ammonium comme le chlorure d'(époxy-2,3 propyl) triméthyl-ammonium, le N-méthyl N-(époxy-2,3 propyl) morpholinium chlorure, certains dérivés halogénés comme le chloroépoxy-propane et le dichloro-propanol, ou des composés polaires comme le sel disodique de la trisulfato-oxyéthylsulfonium-bétaïne et le sel de pyridinium de l'éther chlorométhylique de l'éthylène glycol.

Si l'on désire augmenter le caractère hydrophobe des substrats traités avec les produits selon l'invention, on peut utiliser conjointement certains agents hydrofuges tels que les émulsions de paraffine, ou de cires naturelles ou synthétiques, les compositions à base d'alkylcétène, les silicones, le chlorhydrate de stéaramidométhyl-pyridinium, les condensats de composés à chaîne grasse avec des dérivés de mélamine ou d'urée comme le produit obtenu en faisant réagir l'acide stéarique avec l'hexa-(méthoxyméthyl)-mélamine, la triéthanolamine et l'acide acétique. On peut également utiliser des sels d'acides minéraux ou organiques tels que l'acétate d'alumine, le formiate d'alumine, le stéarate d'alumine, l'acétate de zirconium, le carbonate de zirconium, l'oxychlorure de zirconium, ou les complexes de Werner tels que le stéaratochlorure de chrome.

Enfin, pour obtenir certains effets, on peut également employer les produits fluorés selon l'invention en combinaison avec d'autres produits fluorés tels que ceux décrits dans les brevets français 2 175 332, 2 155 133 et les demandes de brevets français 75 31794, 75 23898 déposés par la Demanderesse, ou avec des polymères ou produits auxiliaires tels que des polymères ou copolymères vinyliques ou acryliques éventuellement sous forme de latex, des polyalkylènes, des poly-glycols, des adoucissants, des colloïdes tels que amidon, dextrine, caséine, des agents de collage, des agents de fixation ou de rétention, des agents tampon, des agents ignifuges, antistatiques, fongicides, des agents de blanchiment optique, des séquestrants, des sels et charges minéraux, des tensio-actifs et même des agents gonflants susceptibles de favoriser la pénétration des copolymères fluorés à l'intérieur des fibres, notamment des fibres de cellulose en utilisant des éthers de polyalkylène glycol ou du diéthylène sulfone.

Outre leurs applications permettant d'obtenir sur papier et carton un effet oléofuge et hydrofuge, ainsi que des propriétés d'antiadhérence, les produits selon l'invention peuvent également être utilisés comme écran contre les solvants ou certaines substances chimiques agressives, employés dans les couchages de laques et vernis. La résistance au toluène, lors des opérations de couchage sur des papiers destinés à la photocopie illustre cette application. Il en est de même vis-à-vis de certains solvants qui composent les encres d'imprimerie. Ils peuvent encore être utilisés pour d'autres applications en tant qu'apprêts "hydrofuge", "anti-tache" ou "soil release" sur textiles ou cuir. Ils peuvent aussi être utilisés pour traiter des fibres textiles et notamment pour réaliser l'ensimage ou l'encollage de celles-ci ou pour obtenir des propriétés particulières telles que des effets antistatiques ou antiboulochage (anti-pilling). Sur des substrats tels que bois, métaux, plastiques, béton, plâtre, on peut obtenir des propriétés intéressantes pour le démoulage, la lutte contre la corrosion ou les salissures et les problèmes relatifs à l'antiadhérence.

Pour évaluer les performances des papiers et cartons traités avec les produits selon l'invention, la demanderesse a utilisé un certain nombre de tests dont les principaux sont les suivants:

*Test d'ingraissabilité ou "Kit value"*

Ce test décrit dans Tappi, vol. 50, nº 10, pages 152 A et 153 A, norme RC 338 et UM 511, permet de mesurer l'ingraissabilité des substrats par des mélanges d'huile de ricin, de toluène et d'heptane. Ceux-ci contiennent des quantités variables de ces trois produits:

| ''Nombre Kit'' | Volume d'huile de ricin | Volume de toluène | Volume d'heptane |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes après qoui, on observe soigneusement l'aspect des papiers ou cartons et on note le mouillage ou la pénétration mis en évidence par un brunissement de la surface. Le nombre correspondant au mélange contenant le pourcentage le plus élevé d'heptane, qui ne pénètre pas ou ne mouille pas le papier est la "kit value" du papier et est considéré comme étant le taux d'oléophobie du papier traité. Plus la "kit value" est élevée, meilleure est l'oléophobie du papier.

*Test à l'essence de térébenthine*

Ce test est décrit dans TAPPI, norme T 454, ts 66 (1966). 5 g de sable de Fontainebleau lavé aux acides sont déposés sur le papier traité, qui est lui-même placé sur un bristol blanc. On verse 1,1 cm3 d'essence de térébenthine anhydre et colorée par 0,5 g par litre de Rouge Organol B S ("Organol" est une marque commerciale déposée). Quand l'essence est finie de verser, on déclenche un chronomètre. Le papier est déplacé toutes les 30 secondes sur le bristol et on note le temps écoulé au moment où le bristol se tache. Au-delà de 30 minutes, on peut admettre que le test n'est plus significatif et que le substrat testé présente d'excellentes performances.

L'essai est effectué sur 7 échantillons du même papier. On note les valeurs trouvées de la plus petite à la plus grande et on considère que la quatrième valeur est la valeur moyenne.

*Test mesurant l'hydrophobie*

Ce test permet de mesurer la résistance à l'eau. Il consiste à déposer doucement sur le papier traité une goutte d'eau. On laisse la goutte sur le papier durant 60 secondes après quoi on examine soigneusement l'aspect de la surface des papiers et cartons. Le mouillage et la pénétration de l'eau sont mis en évidence par un brunissement du substrat.

*Test mesurant la résistance aux produits agressifs ou aux solvants*

Ce test permet d'évaluer l'effet barrière des supports traités vis-à-vis de certains produits tels que l'eau, une solution de soude à 10%, une solution d'acide chlorhydrique à 35,7%, l'heptane, le white spirit, le toluène, le trichloréthylène, le trichlor-1,1,1 éthane, le monochlorbenzène, le méthanol, la cyclohexanone, le dioxane et le monoacétate d'éthylène glycol.

La méthode consiste à déposer doucement sur le papier traité une goutte de ces produits. On laisse la goutte sur le papier durant 30 secondes après quoi, on examine soigneusement l'aspect de la surface des papiers et cartons. L'échec du test est mis en évidence par un brunissement du substrat provoqué par le mouillage ou la pénétration du liquide. On peut également s'aider d'un miroir maintenu à quelques centimètres sous le papier à tester.

*Test permettant d'apprécier la non-influence sur le collage*

La méthode consiste à coller et à traiter les papiers avec les produits selon l'invention, de façon

simultanée suivant le procédé décrit dans le brevet français 2 270 372 de la Demanderesse.

Le degré de collage obtenu, l'aptitude à l'écriture et la résistance aux alcalis, sont ensuite mesurés selon les méthodes décrites dans ce même brevet.

*Test d'imprimabilité*

L'aptitude à l'impression des papiers réalisés avec les produits selon l'invention est appréciée à l'aide de l'appareil de l'Institut Hollandais I G T en déposant 0,6 g d'encre à tirant élevé, à une vitesse uniformément accélérée et à une pression de 37,5 kg/cm. Le test est réalisé en utilisant des encres de différent tirant fournies par les Ets LORILLEUX LEFRANC comme décrites dans le brevet français 2 087 531 de la demanderesse (page 12).

Pour appréhender les propriétés "anti-taches", "hydrophobes" ou "soil release" qui sont obtenues avec les produits de l'invention sur des textiles, tissus non tissés, cuir ou autres substrats, on peut avoir recours aux tests habituels, tels que ceux qui sont décrits dans le brevet français 2 175 332 et la demande de brevet français 75 31794 de la Demanderesse. On peut citer par exemple les méthodes décrites dans "A A T C C Technical Manual — Test Method" N° 118—1972, N° 22—1971 ou N° 130—1970.

Les exemples suivants dans lesquels les pourcentages indiqués sont en poids illustrent l'invention sans la limiter.

Exemple 1

Dans un ballon de 1 000 cm3, muni d'un agitateur, d'un réfrigérant à reflux et d'un thermomètre, on charge 500 g de toluène, 50,5 g (0,5 mole) de triéthylamine et 68 g (0,5 mole) de monométhacrylate d'éthylène glycol, on refroidit la masse à —10°C et on coule à l'aide d'une ampoule 76,5 g (0,5 mole) d'oxychlorure de phosphore en réglant le débit de façon à maintenir la température de la masse entre —10 et +10°C. Après avoir agité le mélange réactionnel à la température ambiante durant 72 heures, on élimine, par filtration, le chlorhydrate de triéthylamine. On obtient ainsi 483 g d'une solution de méthacrylate de dichlorophosphato éthyle à 25% dans le toluène.

Dans un ballon de 500 cm3, muni d'un agitateur, d'un réfrigérant à reflux, d'un thermomètre et d'un dispositif de chauffage, on charge 30 g de toluène et 12 g (0,13 mole) d'acide thioglycolique. On chauffe à 100°C et par l'intermédiaire d'une ampoule on coule en 2 heures environ, une solution composée de 160 g de toluène, 12 g de la solution toluénique préparée précédemment (contenant 3 g de monomère ou 0,01 mole), 2 g d'azo-2,2'bis-(cyano-4 pentanoïque) et 54 g (0,10 mole) du monomère polyfluoré de formule:

$$C_6F_{13}—C_2H_4—SO_2—\underset{\displaystyle CH_3}{\underset{|}{N}}—C_2H_4—O—CO—CH{=}CH_2$$

On maintient la masse réactionnelle 5 heures à 100°C, puison distille le toluène. Après refroidissement vers 60°C, le cotélomère ainsi obtenu est dilué et neutralisé par addition de 100 g d'acétone, 100 g d'eau et 16 g de diéthylamino éthanol. Après refroidissement à la température ambiante, on obtient 275 g d'une solution S 1 de cotélomère selon l'invention. Cette solution est miscible à l'eau froide en toutes proportions en donnant une solution homogène, a un taux de matières sèches de 26% et un taux de fluor de 9,0%. Le cotélomère obtenu n'est pas consistant, il se présente sous la forme d'une pâte dont le point de liquéfaction est de 82°C environ.

On applique ce produit sur un papier non collé dont les caractéristiques sont les suivantes:

— composition fibreuse:
 60% de pâte Kraft blanchie de feuillus
 40% de pâte Kraft blanchie de résineux

— raffinage à l'hydrafineur 00 jusqu'à 35° S R

— adjuvants introduits:
 Talc 15%
 Agent de rétention (RETAMINOL E de la Société BAYER) 3%.

— poids au m2 du papier: 70 à 71 g/m2

— humidité du papier: 4 à 5%.

A cet effet, on prépare un bain à 0,6 g de fluor au litre, pour Size-press ayant la composition suivante (en g/litre):

| Bain de Size-press à 0,6 g de Fluor par litre (A) | |
|---|---|
| Solution S 1 à 26% de matieres sèches et 9,0% de fluor | 6,6 g |
| Eau | 993,4 g |
| | 1 000,0 g |

Cinq feuilles du papier non collé sont traitées superficiellement sur une Size-press à l'aide du bain, avec un taux d'enlevage de 90%. Ces cinq feuilles sont séchées respectivement à 130°C, 110°C, 80°C, 60°C et 25°C. Quelle que soit la température de séchage on obtient un papier présentant un caractère anti-graisse. Leurs caractéristiques sont regroupées dans le tableau suivant comparativement à celles d'un papier identique non traité.

| Conditions d'application | Caractéristiques | |
|---|---|---|
| | Oléophobie (Kit-value) | Test à l'essence de térébenthine |
| Papier traité avec le bain (A) pour Size-press et séché 2 minutes à 130°C | 7 | supérieur à 30 minutes |
| Papier traité avec le même bain et séché 2 minutes à 110°C | 7 | supérieur à 30 minutes |
| Papier traité avec le même bain et seche 2 minutes à 80 °C | 7 | supérieur à 30 minutes |
| Papier traité avec le même bain et séché 4 minutes à 60°C | 7 | supérieur à 30 minutes |
| Papier traité avec le même bain et séché 16 heures a 25°C | 7 | supérieur à 30 minutes |
| Papier non traité (témoin) | 0 | inférieur à 30 secondes |

L'examen des résultats de ce tableau montre que le papier traité avec le produit selon l'invention possède un caractère anti-graisse remarquable et ceci même lorsque la température du traitement thermique auquel on le soumet varie dans de larges limites. Il est intéressant de noter, en outre, que après un simple séchage à la température ambiante, le papier obtenu possède ce caractère.

Exemple 2

Dans un réacteur de 500 cm3, muni d'un agitateur, d'un réfrigérant à reflux, d'un thermomètre et d'un dispositif de chauffage, on charge 30 g de toluène. On chauffe à 100°C et par l'intermédiaire d'une ampoule on coule, en 2 heures environ, une solution composée de 170 g de toluène, 14 g (0,15 mole) d'acide thioglycolique, 2 g d'azo-2,2'bis-isobutyronitrile et 60 g (0,11 mole) du monomère polyfluoré de formule:

$$C_6F_{13}—C_2H_4—SO_2—\underset{\displaystyle CH_3}{\underset{|}{N}}—C_2H_4—O—CO—CH=CH_2$$

On maintient la masse réactionnelle 6 heures à 100°C, puis on distille le toluène. Après refroidissement vers 60°C, le télomère ainsi obtenu est dilué et neutralisé par addition de 150 g d'isopropanol, 50 g de méthyléthylcétone et 20 g de diéthylamino éthanol. Après refroidissement à la

température ambiante, on obtient 290 g d'une solution S 2 de télomère selon l'invention. Cette solution, miscible à l'eau froide en toutes proportions en donnant une solution homogène a un taux de matières sèches de 32% et un taux de fluor de 9,5%. Le télomère obtenu n'est pas consistant, il se présente sous la forme d'une pâte dont le point de liquéfaction est de 85°C environ.

Ce produit est testé à taux de fluor égal, comparativement à:

a) un phosphate d'alcool perfluoré de formule (I):

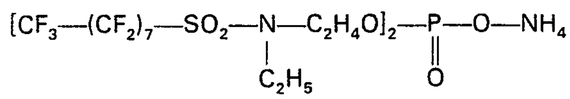

(I)

décrit dans l'exemple 4 du brevet français 2 093 525.

b) un autre phosphate perfluoré de formule (II):

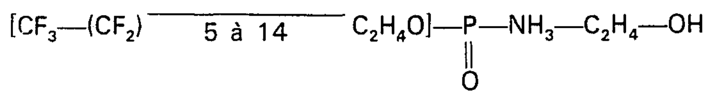

(II)

décrit dans l'example 3 du brevet français 2 093 525.

c) un télomère de formule (III):

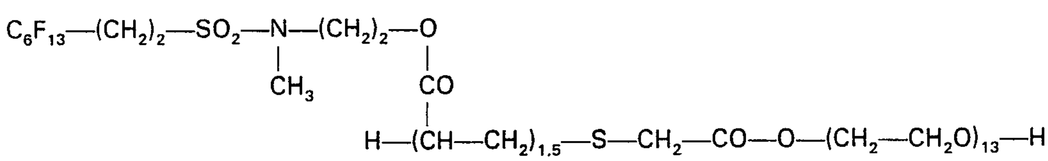

(III)

décrit dans l'exemple 1 de la demande de brevet français 75 31794.

A — On applique ces produits sur le papier non collé dont les caractéristiques sont données à l'exemple 1.

1) A cet effet, on prépare 4 bains à 0,6 g de fluor au litre, pour Size-press ayant la composition suivante (en g/litre):

| Bains de Size-press à 0 ,6 g de fluor par litre: | BAINS | | | |
|---|---|---|---|---|
| | N° 1 | N° 2 | N° 3 | N° 4 |
| | g | g | g | g |
| Solution S 2 à 32% de matières sèches et 9,5% de fluor | 6,4 | | | |
| Solution du composé (I) à 35.7% de matières seches et à 18,8% de fluor | | 3,2 | | |
| Solution du composé (II) à 31% de matières sèches et 16,7% de fluor | | | 3,6 | |
| Solution du composé (III) à 28% de matières sèches et à 7% de fluor, autoémulsionnable dans l'eau | | | | 8,6 |
| Eau | 993,6 | 996,8 | 996,4 | 991,4 |
| Total | 1 000 | 1 000 | 1 000 | 1 000 |

Quatre feuilles de papier non collé, sont traitées en size-press respectivement dans ces 4 bains avec un taux d'enlevage de 90%. Après séchage de 2 minutes à 130°C on obtient des papiers présentant un caractère anti-graisse plus ou moins fort. Les caractéristiques sont regroupées dans le tableau suivant, comparativement à celles d'un papier non traité.

| Caractéristiques | Papiers traités avec les bains | | | | Papier non traité |
|---|---|---|---|---|---|
| | N° 1 | N° 2 | N° 3 | No 4 | |
| Oléophobie ( Kit-value) | 8 | 8 | 8 | 8 | 0 |
| Test à l'essence térébenthine (en minutes ou en secondes) | supérieur à 30 mn | 2 mn | 1 mn | 1 mn | inférieur à 30 sec. |

Le papier traité avec le bain n° 1 selon l'invention présente des caractéristiques supérieures à celles des autres papiers.

2) On prépare 4 autres bains à 3 g de fluor au litre, pour Size-press, ayant la composition suivante (en g/litre):

| Bains de size-press à 3 g de fluor par litre | BAINS | | | |
|---|---|---|---|---|
| | N° 5 | N° 6 | N° 7 | N° 8 |
| | g | g | g | |
| Solution S 2 | 31,5 | | | |
| Solution du composé (I) | | 16,0 | | |
| Solution du composé (II) | | | 18,0 | |
| Solution du composé (III) | | | | 42,8 |
| Eau | 968,5 | 984 | 982 | 957,2 |
| Total | 1 000 | 1 000 | 1 000 | 1 000 |

Quatre feuilles de papier non collé, sont traitées en size-press respectivement dans ces 4 bains avec un taux d'enlevage de 90%. Après séchage de 2 minutes à 130°C, on obtient des papiers présentant un caractère hydrophobe plus ou moins marqué. En outre ils sont dotés d'une résistance variable aux produits aggressifs et aux solvants. Les caractéristiques sont regroupées dans le tableau suivant, comparativement à celles d'un papier non traité.

| Caractéristiques | Papiers traités avec les bains: N° 5 | N° 6 | N° 7 | N° 8 | Papier non traité |
|---|---|---|---|---|---|
| Hydrophobie: (goutte d'eau – 60 secondes) | B | M | B | B | M |
| Résistance aux produits agressifs et aux solvants: (1 goutte – 30 secondes) | | | | | |
| – Solution aqueuse à 10% NaOH | B | M | B | B | M |
| – Solution aqueuse à 35,7% HCl | B | M | M | M | M |
| – Heptane | B | M | B | M | M |
| – White-spirit (Eb.145 à 200°) | B | B | B | M | M |
| – Toluène | B | B | B | M | M |
| – Trichloroéthylène | B | B | B | M | M |
| – Trichloro-1,1,1 éthane | B | B | B | M | M |
| – Monochlorobenzène | B | B | B | M | M |
| – Méthanol | B | M | M | M | M |
| – Cyclohexanone | B | B | B | M | M |
| – Dioxane | B | B | B | M | M |
| – Monoacétate d'éthylène glycol | B | B | M | M | M |

B = Bon M = Mauvais

L'examen des résultats du tableau ci-dessus montre que le papier traité avec le produit selon la présente invention possède un caractère hydrophobe et est doué d'une bonne résistance vis-à-vis des acides, des bases et de nombreux solvants.

B — On prépare quatre formettes de papier à l'aide des compositions suivantes contenant 0,02 g de fluor pour 160 g de pâte aqueuse:

| Compositions | N° 9 | N° 10 | N° 11 | N° 12 |
|---|---|---|---|---|
| Pâte "bisulfite blanchie" sèche | 4 g | 4 g | 4 g | 4 g |
| Eau | 156 | 156 | 156 | 156 |
| Solution S 2 à 32% de matières sèches et 9,5% de fluor | 0,21 | | | |
| Solution du composé (I) à 35,7% de matières sèches et à 18,8% de fluor | | 0,11 | | |
| Solution du composé (II) à 31% de matières sèches et à 16,7% de fluor | | | 0,12 | |
| Solution du composé (III) à 28% de matières sèches et à 7% de fluor auto-émulsionnable dans l'eau | | | | 0,29 |

Chaque pâte ainsi préparée est diluée dans le bol d'une machine "Rapid-Kotten" avec 4 litres d'eau. On agite 30 secondes puis on filtre sous vide. Les formettes de papier ainsi obtenues sont séchées sous vide 10 minutes à 90°C sur les plaques de la machine "Rapid-Kotten".

On obtient ainsi quatre feuilles de papier, traitées dans la masse, dont les caractéristiques figurent dans le tableau suivant, comparativement à celles d'une feuille témoin non traitée.

| | Caractéristiques | |
|---|---|---|
| | Oléophobie (Kit-value) | Test à l'essence de térébenthine |
| Formette préparée avec la composition 9 | 7 | supérieur à 30 minutes |
| Formette préparée avec la composition 10 | 7 | 1 minute |
| Formette préparée avec la composition 11 | 7 | 1 minute |
| Formette préparée avec la composition 12 | 7 | 1 minute |
| Formette témoin | 0 | inférieur à 30 secondes |

Exemple 3

Dans un réacteur de 500 cm3, muni d'un agitateur, d'un réfrigérant à reflux, d'un thermomètre et d'un dispositif de chauffage, on charge 30 g de toluène et 5 g (0,05 mole) d'acide thiglycolique. On chauffe à 100°C et par l'intermédiaire d'une ampoule on coule en 2 heures environ une solution composée de 170 g de toluène, 2 g d'azo-2,2'bis-isobutyronitrile, 6 g (0,06 mole) d'anhydride maléîque et 54 g (0,10 mole) du monomère polyfluoré de formule:

$$C_6F_{13}—C_2H_4—SO_2—\underset{\underset{CH_3}{|}}{N}—C_2H_4—O—CO—CH=CH_2$$

On maintient la masse réactionnelle 5 heures à 100°C, puis on distille le toluène. Après refroidissement vers 60°C, le cotélomère ainsi obtenu est dilué et neutralisé par addition de 100 g d'acétone, 100 g d'eau et 13 g de diéthylaminoéthanol. Après refroidissement à la température ambiante, on obtient 268 g d'une solution S 3 de cotélomère selon l'invention. Cette solution est miscible à l'eau froide en toutes proportions en donnant une solution homogène, a un taux de matières sèches de 27,2% et un taux de fluor de 9,2%. Ce cotélomère n'est pas consistant, il se présente sous la forme d'une pâte dont le point de liquéfaction est de 80°C environ.

On applique ce produit sur des tissus de fibres acryliques (DRALON), de fibres de polyester (TERGAL) et de laine ("Dralon" et "Tergal" sont des marques commerciales déposées). Pour cela on prépare un bain de foulardage contenant:

| Bain de foulardage | g/l |
|---|---|
| Solution S 3 du cotélomère à 27,2% de matières sèches et 9,2% de fluor | 20 |
| Solution aqueuse à 65% d'un précondensat d'éther triméthylique de l'hexaméthylolmélamine | 20 |
| Chlorure d'ammonium | 5 |

On foularde les 3 tissus ci-dessus avec un taux d'exprimage respectif de 103%, 79%, 85% environ. Les tissus sont ensuite traités, pendant 3 minutes à 165°C pour les 2 premiers et 3 minutes à 110°C pour la laine, dans un thermocondenseur BENZ ("Benz" est une marque commerciale déposée).

Les caractéristiques des tissus ainsi traités (T) sont indiqués dans le tableau suivant, comparativement à celles des tissus témoins non traités (N T).

| Caractéristiques | tissu de DRALON | | tissu de TERGAL | | tissu de LAINE | |
|---|---|---|---|---|---|---|
| | T | N T | T | N T | T | N T |
| Hydrophobie (spray-test) norme AATCC – 22 – 1971 | 100 | 0 | 80 | 50 | 100 | 80 |
| Oléophobie norme AATCC – 118 – 1972 | 4 | 0 | 5 | 0 | 6 | 0 |

L'examen des résultats du tableau ci-dessus montre que les tissus apprêtés avec le produit selon l'invention, possèdent un caractère anti-tache, c'est-à-dire susceptibles de résister aux taches maigres et grasses.

### Exemple 4

Dans un ballon de 500 cm3, muni d'un agitateur, d'un réfrigérant à reflux, d'un thermomètre et d'un dispositif de chauffage, on charge 15 g de tétrahydrofurane, on chauffe à 65°C et par l'intermédiaire d'une ampoule on coule, en 2 heures environ, une solution composée de 100 g de tétrahydrofurane, 1 g d'azo-2,2'bis-isobutyronitrile, 1 g de perpivalate de tertiobutyle, 7,5 g (0,08 mole) d'acide thioglycolique et 30 g (0,05 mole) du monomère polyfluoré de formule:

$$C_nF_{2n+1}—C_2H_4—SO_2—\underset{\displaystyle CH_3}{\underset{|}{N}}—C_2H_4—O—CO—CH=CH_2$$

$C_nF_{2n+1}$ représentant un mélange statistique de:

59% de $C_6F_{13}$
25% de $C_8F_{17}$
8% de $C_{10}F_{21}$
3% de $C_{12}F_{25}$

On maintient la masse réactionnelle 5 heures à 65°C. Après refroidissement vers 50°C, le cotélomère ainsi obtenu est dilué et neutralisé par addition de 100 g d'acétone et 10 g de

diéthylaminoéthanol. Après refroidissement à la température ambiante, on obtient 244 g d'une solution S 4 de cotélomère selon l'invention. Cette solution est miscible à l'eau froide en toutes proportions en donnant une solution homogène, a un taux de matières sèches de 19,4% et un taux de fluor de 5,9%. Ce cotélomère n'est pas consistant, il se présente sous la forme d'une pâte dont le point de liquéfaction est de 92°C environ.

On applique ce produit sur le papier non collé dont les caractéristiques sont données à l'exemple 1.

A cet effet on prépare un bain à 0,7 g de fluor au litre, pour Size-press ayant la composition suivante (en g/litre):

| Bain de Size-press à 0,7 g de fluor par litre | |
|---|---|
| Solutions S 4 à 19,4% de matières sèches et 5,9% de fluor | 12 g |
| Eau | 988 g |
| | 1 000 g |

Une feuille du papier non collé est traitée sur Size-press à l'aide de ce bain avec un taux d'enlevage de 90%. Après séchage de 2 minutes à 130°C, on obtient un papier présentant un caractère anti-graisse. Ses caractéristiques sont regroupées dans le tableau suivant comparativement à celles d'un papier témoin non traité:

| Caractéristiques | Papier traité avec le bain ci-dessus | Papier non traité |
|---|---|---|
| Oléophobie (Kit-value) | 8 | 0 |
| Test à l'essence de térébenthine | supérieur à 30 minutes | inférieur à 30 secondes |

Exemple 5

Dans un ballon de 500 cm3, muni d'un agitateur, d'un réfrigérant à reflux, d'un thermomètre et d'un dispositif de chauffage, on charge 30 g de toluène, 11 g (0,12 mole) d'acide thioglycolique, on chauffe à 100°C et par l'intermédiaire d'une ampoule on coule, en 2 heures environ, une solution composée de 100 g de toluène, 2 g d'azo-2,2'bis-isobutyronitrile et 60 g (0,11 mole) du monomère polyfluoré de formule:

$$C_8F_{17}—C_2H_4—O—CO—CH=CH_2$$

On maintient la masse réactionnelle 5 heures à 100°C puis on distille le toluène. Après refroidissement vers 60°C, le télomère ainsi obtenu est dilué et neutralisé par addition de 100 g d'acétone. 100 g d'eau et 15 g de diéthylaminoéthanol. Après refroidissement à la température ambiante, on obtient 283 g d'une solution S 5 de télomère selon l'invention. Cette solution est miscible à l'eau froide et toutes proportions en donnant une solution homogène, a un taux de matières sèches de 30,3% et un taux de fluor de 13,1%. Ce télomère n'est pas consistant, il se présente sous la forme d'une pâte dont le point de liquéfaction est de 90°C environ.

On applique ce produit sur le papier non collé dont les caractéristiques sont données à l'exemple 1.

A cet effet, on prépare un bain à 0,7 g de fluor au litre, pour Size-press ayant la composition suivante (en g/litre):

| Bain de Size-press à 0,7 g de fluor par litre | |
|---|---|
| Solution S 5 à 30,3% de matières sèches et 13,1% de fluor | 5,4 g |
| Eau | 994,6 g |
| | 1 000 g |

Une feuille du papier non collé est traitée sur Size-press à l'aide de ce bain avec un taux d'enlevage de 90%. Après séchage de 2 minutes à 110°C, on obtient un papier présentant un caractère anti-graisse. Ses caractéristiques sont regroupées dans le tableau suivant comparativement à celles d'un papier témoin non traité:

| Caractéristiques | Papier traité avec le bain ci-dessus | Papier non traité |
|---|---|---|
| Oléophobie (Kit-value) | 8 | 0 |
| Test à l'essence de térébenthine | supérieur à 30 minutes | inférieur à 30 secondes |

Exemple 6

Dans un ballon de 500 cm3, muni d'un agitateur, d'un réfrigérant à reflux, d'un thermomètre et d'un dispositif de chauffage, on charge 100 g de dioxane, 16,5 g (0,11 mole) d'acide thiomalique, on chauffe à 95°C et par l'intermédiaire d'une ampoule on coule, en 2 heures environ, une solution composée de 100 g de dioxane, 2 g d'azo-2,2'bis-isobutyronitrile et 60 g (0,11 mole) du monomère polyfluoré de formule:

$$C_6F_{13}—C_2H_4—SO_2—\underset{\displaystyle CH_3}{\underset{|}{N}}—C_2H_4—O—CO—CH=CH_2$$

On maintient la masse réactionnelle 5 heures à 95°C. Après refroidissement vers 60°C, le télomère ainsi obtenu est neutralisé par addition de 20 g d'amino-2 méthyl-2 propanol-1. Après refroidissement à la température ambiante on obtient 296 g d'une solution S 6 de télomère selon l'invention. Cette solution est miscible à l'eau froide en toutes proportions en donnant une solution homogène, a un taux de matières sèches de 32,6% et un taux de fluor de 9,3%. Ce télomère n'est pas consistant, il se présente sous la forme d'une pâte dont le point de liquéfaction est de 103°C environ.

On applique ce produit sur un papier non collé AFNOR VII pesant 77 g/m2. A cet effet, on prépare un bain à 5 g de fluor/litre, pour Size-press ayant la composition suivante (en gramme par litre):

| Bain de Size-press à 5 g de fluor par litre | |
|---|---|
| – Latex anionique à 20% de matières sèches, obtenu en copolymérisant en émulsion un mélange de monomères ayant la composition suivante:<br><br>64,3 parties d'acrylate de butyle<br>14,3 parties d'acétate de vinyle<br>20,0 parties d'acide méthacrylique<br>1,4 partie de N-méthylol acrylamide<br><br>(cité à l'exemple 3 du brevet français 2 270 372) | 15 g |
| – Solution S 6 à 32,6% de matières sèches et 9,3% de fluor | 53,7 g |
| – Acétate de sodium | 1 g |
| – Ammoniaque à 30% en poids d'$NH_3$ (d = 0,892) | 2,5 g |
| – Eau | 927,8 g |
| | 1 000 g |

Une feuille du papier non collé est traitée en Size-press à l'aide de ce bain avec un taux d'enlevage de 97%. Après un séchage de 2 minutes à 130°C, on obtient un papier collé, parfaitement apte à l'écriture et présentant un caractère antigraisse remarquable. Ses caractéristiques sont regroupées dans le tableau suivant, comparativement à celles d'un papier identique non traité:

| Caractéristiques | | Papier traité avec le bain ci-dessus | Papier non traité |
|---|---|---|---|
| Oléophobie (Kit-value) | | 9 | 0 |
| Test à l'essence de térébenthine | | supérieur à 30 minutes | inférieur à 30 secondes |
| Test de COBB (eau absorbée en $g/m^2$ en une minute) | | 30 | 160 |
| Aptitude à l'écriture | Bavure | 5 | 0 |
| | Transpercement | 5 | 0 |

Dans cet exemple le degré de collage, mesuré par le pouvoir absorbant du papier vis-à-vis de l'eau, est évalué suivant la méthode de COBB et LOWE (TAPPI Standard T 441) codifiée par le Comité des Essais du Laboratoire Central de l'Industrie Papetière Suédoise (Projet P.C.A. 13—59), méthode qui consiste à mesurer le poids d'eau absorbée pendant une minute par un mètre carré de papier supportant une hauteur d'eau d'un centimètre; l'aptitude à l'écriture et à l'impression du papier est appréciée par le test décrit dans le bulletin ATIP n° 2—1960 — pages 84 à 91 (P. PHILBEE) qui consiste à faire sur le papier des traits sans bavure ni transpercement avec des encres normalisées numérotées de 1 à 5, de plus en plus agressives.

Exemple 7

Dans un ballon de 500 cm3, muni d'un agitateur, d'un réfrigérant à reflux, d'un thermomètre et d'un dispositif de chauffage, on charge 30 g de toluène, on chauffe à 100°C et par l'intermédiaire d'une ampoule on coule, en 2 heures environ, une solution composée de 170 g de toluène, 2 g d'azo-2,2'bis-isobutyronitrile, 16 g (0,17 mole) d'acide thioglycolique et 60 g (0,11 mole) du monomère polyfluoré de formule:

$$C_6F_{13}—C_2H_4—SO_2—N—C_2H_4—O—CO—CH{=}CH_2$$

$$|$$

$$CH_3$$

On maintient la masse réactionnelle 5 heures à 100°C, puis on distille le toluène. Après refroidissement vers 60°C, le télomère ainsi obtenu est dilué et neutralisé par addition de 100 g d'acétone, 80 g d'eau et 20 g d'ammoniaque à 30% en poids d'$NH_3$. Après refroidissement à la température ambiante, on obtient 271 g d'une solution S 7 de télomère selon l'invention. Cette solution est miscible à l'eau froide en toutes proportions en donnant une solution homogène, a un taux de matière sèches de 30,5% et un taux de fluor de 10,1%. Ce télomère n'est pas consistant, il se présente sous la forme d'une pâte dont le point de liquéfaction est de 86°C environ.

On enduit par trempé une éprouvette d'aluminium de cette solution S 7. On laisse sécher 8 heures à température ambiante puis on dépose sur l'éprouvette ainsi traitée et sur une éprouvette témoin non traitée, quelques gouttes d'une solution aqueuse de soude 0,25 N et on laisse en contact 24 heures. Après ce laps de temps, on lave la surface testée des éprouvettes à l'aide d'un chiffon humide. On constate alors que l'éprouvette témoin, non traitée, a été attaquée par la soude, cette attaque étant caractérisée par la formation d'une tache grisâtre et d'une surface dépolie. On constate d'autre part qu'il n'y a aucune attaque sur l'éprouvette traitée avec le produit selon l'invention.

Exemple 8

Dans un ballon de 500 cm3, muni d'un agitateur, d'un réfrigérant à reflux, d'un thermomètre et d'un dispositif de chauffage, on charge 30 g d'isopropanol et 10 g (0,10 mole) d'acide thioglycolique. On chauffe à 80°C et par l'intermédiaire d'une ampoule on coule, en 2 heures environ, une solution composée de 170 g d'isopropanol, 2 g d'azo-2,2'bis-isobutyronitrile, 12 g (0,16 mole) d'acide acrylique et 48 g (0,08 mole) du monomère polyfluoré de formule:

$$C_6F_{13}—C_2H_4—SO_2—N—C_2H_4—O—CO—CH{=}CH_2$$

$$|$$

$$CH_3$$

On maintient la masse réactionnelle 5 heures à 80°C, on ajoute au cotélomère ainsi obtenu 33 g de diéthylaminoéthanol et on refroidit à température ambiante. Après filtration on obtient 286 g d'une solution S 8 de cotélomère selon l'invention. Cette solution est miscible à l'eau froide en toutes proportions en donnant une solution homogène, a un taux de matières sèches de 36,0% et un taux de fluor de 7,7%. Ce cotélomère n'est pas consistant, il se présente sous la forme d'une pâte dont le point de liquéfaction est de 78°C environ.

On applique ce produit sur le papier non collé dont les caractéristiques sont données à l'exemple 1.

A cet effet, on prépare un bain à 0,8 g de fluor au litre pour Size-press, ayant la composition suivante (en g/litre):

| Bain de Size-press à 0,8 g de fluor par litre | |
|---|---|
| Solution S 8 à 36% de matières sèches et 7,7% de fluor | 10,4 g |
| Eau | 989,6 g |
| | 1 000 g |

Une feuille du papier non collé est traitée sur Size-press à l'aide de ce bain avec un taux d'enlevage de 90%. Après un séchage de 3 minutes à 110°C, on obtient un papier présentant un caractère anti-graisse. Ses caractéristiques sont regroupées dans le tableau suivant comparativement à celles d'un papier témoin non traité:

| Caractéristiques | Papier traité avec le bain ci-dessus | Papier non traité |
|---|---|---|
| Oléophobie (Kit-value) | 9 | 0 |
| Test à l'essence de térébenthine | supérieur à 30 minutes | inférieur à 30 secondes |

Exemple 9

Dans un ballon de 500 cm3, muni d'un agitateur, d'un réfrigérant à reflux, d'un thermomètre et d'un dispositif de chauffage, on charge 30 g de toluène, 10 g (0,10 mole) d'acide thioglycolique. On chauffe à 100°C et par l'intermédiaire d'une ampoule on coule, en 2 heures environ, une solution composée de 170 g de toluène, 2 g de triéthylamine, 60 g (0,11 mole) du monomère polyfluoré de formule:

$$C_6F_{13}—C_2H_4—SO_2—N(CH_3)—C_2H_4—O—CO—CH{=}CH_2$$

On maintient la masse réactionnelle 5 heures à 100°C, puis on distille le toluène. Après refroidissement vers 60°C, le condensat ainsi obtenu est dilué et neutralisé par addition de 100 g d'eau, 100 g d'acétone et 13 g de diéthylaminoéthanol. Après refroidissement à température ambiante on obtient 274 g d'une solution S 9 d'un condensat selon l'invention. Cette solution est miscible à l'eau froide en toutes proportions en donnant une solution homogène, a un taux de matières sèches de 30,2% et un taux de fluor de 10,0%. Ce condensat n'est pas consistant, il se présente sous la forme d'une pâte dont le point de liquéfaction est de 72°C environ.

On applique ce produit à la brosse sur trois cuirs différents et on laisse sécher 16 heures à température ambiante. On obtient des cuirs présentant de remarquables propriétés anti-graisse et totalement hydrophobes. Les caractéristiques des cuirs ainsi traités (T) sont regroupées dans le tableau suivant comparativement à celles de cuirs non traités (N T):

| Caractéristiques | Vachette pleine fleur tannée au chrome | | Chèvre tannée au chrome | | Barane (mouton) | |
|---|---|---|---|---|---|---|
| | T | N T | T | N T | T | N T |
| Hydrophobie (spray-test) norme AATCC – 22 – 1971 | 100 | 0 | 100 | 0 | 100 | 0 |
| Oléophobie norme AATCC – 118 – 1972 | 8 | 0 | 8 | 0 | 8 | 0 |

Ce produit est testé comparativement, à taux de fluor égal, à un télomère de formule (I):

$$C_6F_{13}—(CH_2)_2—SO_2—N(CH_3)—(CH_2)_2—O—CO$$

$$H—(CH—CH_2)_{1.5}—S—CH_2—COO(CH_2—CH_2—O)_{13}H$$

décrit dans l'exemple 1 de la demande de brevet français 75.31794.

On prépare des solutions à 7% de fluor qu'on applique à la brosse sur 3 cuirs différents [vachette pleine fleur tannée au chrome, chèvre tannée au chrome et barane (mouton)]. On laisse sécher 16 heures à temperature ambiante. On dépose sur les cuirs ainsi traités, ainsi que sur des cuirs non traités, quelques gouttes d'essence de térébenthine colorée par 0,5 g/l de rouge Organol BS et laisse 2 heures en contact. On éponge et on examine les surfaces de cuirs ainsi traitées. On constate qu'il reste sur les cuirs traités avec la solution de télomère de formule (I) et sur les cuirs non traités, une tache rouge indélébile alors qu'il n'y a aucune tache sur les cuirs traités avec le produit de la présente invention.

Exemple 10

Dans un ballon de 500 cm3, muni d'un agitateur, d'un réfrigérant à reflux, d'un thermomètre et d'un dispositif de chauffage, on charge 100 g de dioxane, 17 g (0,11 mole) d'acide thiosalicylique, on chauffe à 100°C et par l'intermédiaire d'une ampoule on coule en 2 heures environ une solution composée de 100 g de dioxane, 2 g d'azo-2,2'bis-isobutyronitrile, et 60 g (0,11 mole) du monomère polyfluoré de formule:

$$C_6F_{13}—C_2H_4—SO_2—N(CH_3)—C_2H_4—O—CO—CH{=}CH_2$$

On maintient la masse réactionnelle 5 heures à 100°C, puis on distille le dioxane. Après refroidissement vers 60°C, le télomère ainsi obtenu est dilué et neutralisé par addition de 100 g d'acétone, 100 g d'eau et 10 g d'amino-2 méthyl-2 propanol-1. Après refroidissement à la température ambiante on obtient 275 g d'une solution S 10 de télomère selon l'invention. Cette solution est miscible à l'eau froide en toutes proportions en donnant une solution homogène, a un taux de matières sèches de 31,6% et un taux de fluor de 10,0%. Ce télomère n'est pas consistant, il se présente sous forme d'une pâte dont le point de liquéfaction est de 85°C environ.

On applique ce produit sur le papier non collé dont les caractéristiques sont données à l'exemple 1. A cet effet, on prépare un bain à 2 g de fluor au litre, pour Size-press ayant la composition suivante (en g/litre):

| Bain de Size-press à 2 g de fluor par litre | |
|---|---|
| – Solution S 10 à 31,6% de matières sèches et 10% de fluor | 20 g |
| – Eau | 980 g |
| | 1 000 g |

Une feuille de papier non collé est traitée sur Size-press à l'aide de ce bain avec un taux d'enlevage de 90%. Après un séchage de 2 minutes à 130°C, on obtient un papier présentant un

caractère anti-graisse. Les caractéristiques sont regroupées dans le tableau suivant comparativement à celles d'un papier témoin non traité:

| Caractéristiques | Papier traité avec le bain ci-dessus | Papier non traité |
|---|---|---|
| Oléophobie (Kit-value) | 12 | 0 |
| Test à l'essence de térébenthine | supérieur à 30 minutes | inférieur à 30 secondes |

Exemple 11

Dans un ballon de 500 cm3, muni d'un agitateur, d'un réfrigérant à reflux, d'un thermomètre et d'un dispositif de chauffage, on charge 30 g de toluène et 14 g (0,15 mole) d'acide thiogycolique, on chauffe à 100°C et par l'intermédiaire d'une ampoule on coule, en 2 heures environ, une solution composée de 170 g de toluène, 2 g d'azo-2,2'bis-isobutyronitrile, 6 g (0,05 mole) de 2-chloro éthyl vinyl éther et 54 g (0,10 mole) du monomère polyfluoré de formule:

$$C_6F_{13}-C_2H_4-SO_2-\underset{\displaystyle CH_3}{\underset{|}{N}}-C_2H_4-O-CO-CH=CH_2$$

On maintient la masse réactionnelle 5 heures à 100°C puis on distille le toluène. Après refroidissement vers 60°C, le cotélomère ainsi obtenu est dilué et neutralisé par addition de 100 g d'eau, 100 g d'acétone et 18 g de diéthylaminoéthanol. Après refroidissement à la température ambiante, on obtient 283 g d'une solution S 11 de cotélomère selon l'invention. Cette solution est miscible à l'eau froide en toutes proportions en donnant une solution homogène, a un taux de matières sèches de 32,5% et un taux de fluor de 8,8%. Ce cotélomère n'est pas consistant, il se présente sous la forme d'une pâte dont le point de liquéfaction est de 64°C environ.

On applique ce produit sur le papier non collé dont les caractéristiques sont données à l'exemple 1.

A cet effet, on prépare un bain à 0,6 g de fluor au litre, pour Size-press, ayant la composition suivante (en g/litre):

| Bain pour Size-press à 0,6 g de fluor par litre | |
|---|---|
| – Solution S 11 à 32,5% de matières sèches et 8,8% de fluor | 6,8 g |
| – Eau | 993,2 g |
| | 1 000 g |

Une feuille de papier non collé est traitée sur Size-press à l'aide de ce bain avec un taux d'enlevage de 90%. Après séchage de 2 minutes à 100°C, on obtient un papier présentant un caractère anti-graisse. Ses caractéristiques sont regroupées dans le tableau suivant comparativement à celles d'un papier témoin non traité.

| Caractéristiques | Papier traité avec le bain ci-dessus | Papier non traité |
|---|---|---|
| Oléophobie (Kit-value) | 8 | 0 |
| Test à l'essence de térébenthine | supérieur à 30 minutes | inférieur à 30 secondes |

Exemple 12

Dans un ballon de 500 cm3, muni d'un agitateur, d'un réfrigérant à reflux, d'un thermomètre et d'un dispositif de chauffage, on charge 140 g de méthyl éthyl cétone, 10 g (0,10 mole) d'acide thioglycolique, 0,2 g de peroxyde de benzoyle, 54 g (0,10 mole) du monomère polyfluoré de formule:

$$C_6F_{13}-C_2H_4-SO_2-\underset{\displaystyle CH_3}{\underset{|}{N}}-C_2H_4-O-CO-CH=CH_2$$

On chauffe le mélange à 80°C et on maintient durant 5 heures à cette température. Après quoi, le télomère ainsi obtenu est dilué et neutralisé par addition de 140 g d'isopropanol et 30 g d'un produit de condensation de 3 molécules d'oxyde d'éthylène sur 1 mole de triéthanolamine. Après refroidissement à la température ambiante, on obtient 358 g d'une solution S 12 de télomère selon l'invention. Cette solution est miscible à l'eau froide, en toutes proportions, en donnant des solutions homogènes, a un taux de matières sèches de 26,2% et un taux de fluor de 6,9%. Ce télomère n'est pas consistant, il se présente sous la forme d'une pâte dont le point de ramollissement est de 58°C environ.

On applique ce produit sur des tissus de polyester (TERGAL) et de polyamide (NYLON). Pour cela, on prépare le bain de foulardage suivant:

| Bain de foulardage | g/l |
|---|---|
| – Solution S 12 du cotélomère à 26.2% de matières sèches et 6,9% de fluor | 60 |
| – Solution aqueuse à 65% d'un précondensat d'éther triméthylique de l'hexaméthylolmélamine | 40 |
| – Isopropanol | 20 |
| – Chlorure d'ammonium | 10 |

On foularde les deux tissus ci-dessus avec un taux d'exprimage respectif de 84% (TERGAL) et 108% (NYLON).

Les tissus sont ensuite traités pendant 2 minutes à 160°C dans un thermocondenseur BENZ. On mesure la résistance sous 500 volts (courant continu) d'une bande de tissu ainsi traitée (T) de longueur 10 cm et de largeur 5 cm, à 65° hygrométrique et à 20°C comparativement à celle d'un tissu non traité (N T). Sur le tissu traité on constate une diminution de la résistivité, ce qui permet de mettre en évidence le bon écoulement des charges statiques. En outre, les tissus traités avec le produit selon l'invention présentent des caractères hydrophobes et oléophobes comme le montrent les performances consignées dans le tableau ci-dessous.

| Caractéristiques | Polyester | | Nylon | |
|---|---|---|---|---|
| | T | N T | T | N T |
| Résistivité en Ω | $1,2\ 10^{11}$ | $2,5\ 10^{13}$ | $5,7\ 10^{11}$ | $8,0\ 10^{13}$ |
| Oléophobie norme AATCC 118 – 1972 | 6 | 0 | 6 | 0 |
| Hydrophobie norme AATCC 22 – 1971 (Spray-test) | 70 | 50 | 80 | 0 |

Exemple 13

Dans un réacteur de 500 cm3, muni d'un agitateur, d'un réfrigérant à reflux, d'un thermomètre et d'un dispositif de chauffage, on charge 30 g de toluène. On chauffe à 100°C et par l'intermédiaire d'une ampoule on coule, en deux heures environ, une solution composée de 170 g de toluène, 14 g (0,15 mole) d'acide thioglycolique, 2 g d'azo-2,2'bis-isobutyronitrile et 60 g (0,11 mole) du monomère polyfluoré de formule:

$$C_6F_{13}—C_2H_4—SO_2—N(CH_3)—C_2H_4—O—CO—CH=CH_2$$

On maintient la masse réactionnelle 6 heures à 100°C, puis on distille le toluène. Après refroidissement vers 60°C, le télomère ainsi obtenu est dilué par addition de 190 g d'isopropanol. Après refroidissement à température ambiante, on obtient 256 g d'une solution S 13 de télomère selon l'invention ayant un taux de matières sèches de 28,9% et un taux de fluor de 10,7%.

Le télomère obtenu n'est pas consistant, il se présente sous la forme d'une pâte dont le point de liquéfaction est de 84°C environ.

Ce produit est testé à taux de fluor égal comparativement à un télomère de formule (I):

$$C_6F_{13}—(CH_2)_2—SO_2—N(CH_3)—(CH_2)_2—O—CO—$$
$$H—(CH—CH_2)_{1,5}—S—CH_2—COO—(CH_2—CH_2—O)_{13}—H$$

décrit dans l'exemple 1 de la demande de brevet français 75.31794.

A cet effet, on prépare des solutions à 7% de fluor et on enduit une planche de bois de chêne avec la solution S 13. De la même façon, on enduit une planche de bois de chêne avec la solution du composé de formule (I). On laisse sécher 8 heures à température ambiante. On dépose quelques gouttes d'eau sur les deux surfaces traitées ainsi que sur un planche de bois de chêne non traitée. On constate que sur la planche traitée avec la solution de télomère S 13, l'eau s'évapore sans laisser de trace, sur la planche traitée avec la solution du composé de formule (I) l'eau s'évapore en laissant une tache brune et sur la planche non traitée, l'eau pénètre instantanément en formant une tache.

D'autre part, on dépose sur des planches de bois de chêne, traitées de la même façon que ci-dessus, quelques gouttes d'essence de térébenthine colorée par 0,5 g/l de rouge Organol BS. Après 2 heures, à l'aide d'un papier buvard, on éponge les gouttes déposées. On constate qu'il reste sur le bois non traité et sur le bois traité avec la solution du composé de formule (I) une tache rouge indélébile, alors qu'il n'y a aucune tache sur le bois traité avec les solutions du télomère S 13.

**Revendications**

1. Produits fluorés résultant de la condensation ou de la télomérisation d'un sulfure avec un composé possédant au moins une liaison éthylénique caractérisés en ce que l'on fait réagir:

(a) une molécule d'un ou plusieurs acides de formule générale:

$$HS—A—(COOH)_n \qquad (I)$$

dans laquelle A représente un radical hydrocarboné aliphatique ou aromatique et n est un nombre entier allant de 1 à 4 et de,

(b) une à cinq molécules d'un ou plusieurs composés possédant au moins une liaison éthylénique, l'un au moins de ces composés répondant à la formule générale:

$$Rf—B—C(R)=CH—R \qquad (II)$$

dans laquelle Rf représente une chaîne perfluorée, droite ou ramifiée, contenant 1 à 20, de préférence 2 à 14 atomes de carbone, B représente un enchainement bivalent éventuellement ramifié et pouvant comporter des atomes de soufre, d'oxygène ou d'azote, l'un des symboles R représente un atome d'hydrogène et l'autre représente un atome d'hydrogène ou un groupe alkyl contenant 1 à 4 atomes de carbone et que, éventuellement, on neutralise ou neutralise partiellement les produits obtenus avec une base minérale ou organique.

2. Produits selon la revendication 1, dans laquelle l'acide de formule (I) est l'acide thioglycolique, l'acide thiosalicylique ou l'acide thiomalique.

3. Produits selon la revendication 1 ou 2, dans laquelle la base est un amino alcool ou une amine.

4. Produits selon la revendication 1 ou 2, dans laquelle la base est l'ammoniaque.

5. Produits selon l'une des revendications 1 à 4, dans laquelle le composé de formule (II) est un composé de formule:

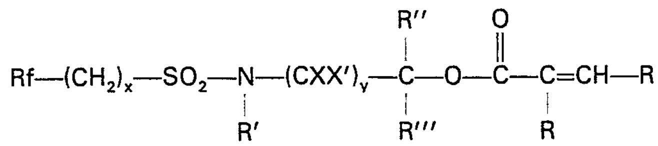 (III)

dans laquelle Rf et R ont les mêmes significations que dans la revendication 1, x représente un nombre entier allant de 1 à 20, de préférence égal à 2 ou 4, y un nombre entier allant de 1 à 4, de préférence égal à 1 ou 2, R' représente un atome d'hydrogène ou un groupe alkyle contenant 1 à 10 atomes de carbone, cycloalkyle contenant 5 à 12 atomes de carbone, hydroxyalkyle contenant 2 à 4 atomes de carbone ou aryle éventuellement substitué par un radical alkyle contenant 1 à 6 atomes de carbone, R'', R''', X et X' peuvent être identiques ou différents et représentent des atomes d'hydrogène ou des groupes alkyle contenant 1 à 4 atomes de carbone.

6. Produits selon l'une des revendications 1 à 4, dans laquelle le composé de formule (II) est un composé de formule:

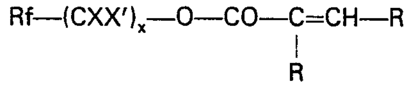

dans laquelle Rf, X, X', x et R ont les mêmes significations que dans les revendications 1 et 5.

7. Produits selon l'une des revendications 1 à 6, dans laquelle les deux R sont des atomes d'hydrogène.

8. Procédé pour la préparation des produits selon l'une des revendications 1 à 7, caractérisé en ce que l'on télomérise ou cotélomérise 1 à 5 molécules d'un ou plusieurs composés possédant au moins une liaison éthylénique, l'un de ces composés répondant à la formule (II) telle que définie dans la revendication 1, avec une molécule d'un ou plusieurs acides de formule (I) tels que définis dans la revendication 1, en présence d'un catalyseur ionique ou radicalaire et éventuellement neutralise ou neutralise partiellement par une base minérale ou organique.

9. Procédé pour la préparation des produits selon l'une des revendications 1 à 7, caractérisé en ce que l'on condense une molécule d'un ou plusieurs acides de formule (I) tels que définis dans la revendication 1 et une molécule des composés éthyléniques de formule (II) tels que définis dans la revendication 1, en présence ou non d'un catalyseur basique et éventuellement neutralise ou neutralise partiellement avec une base minérale ou organique.

10. Procédé selon la revendication 8 ou 9, caractérisé en ce que l'on met en oeuvre 0,01 à 5%, de préférence 0,1 à 1,5% de catalyseur par rapport au poids de composés éthyléniques engagés.

11. Procédé selon l'une des revendications 8 à 10, caractérisé en ce que la réaction est effectuée à un pH compris entre 2 et 11 inclus et à une température comprise entre 40 et 120°C, de préférence entre 50 et 90°C.

12. Application des produits selon l'une des revendications 1 à 7 à l'oléofugation et à l'hydrofugation de divers substrats.

13. Application selon la revendication 12 caractérisée en ce que les substrats sont les papiers, les cartons, les bois, les cuirs, les tissus, les métaux, les maçonneries, les verres, les porcelaines, les plastiques et les surfaces peintes.

**Claims**

1. Fluorinated products resulting from the condensation or telomerisation of a sulphide with a compound containing at least one ethylenic linkage, characterised in that there are reacted:

(a) one molecule of one or more acids of the general formula:

$$HS—A—(COOH)_n \qquad (I)$$

in which A represents an aliphatic or aromatic hydrocarbon radical and n is a whole number from 1 to 4 and

(b) one to five molecules of one or more compounds containing at least one ethylenic linkage, one at least of these compounds corresponding to the general formula:

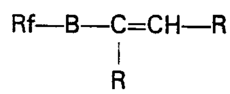 (II)

in which Rf represents a perfluorinated chain, straight or branched, containing 1 to 20, preferably 2 to

14, carbon atoms, B represents a divalent possibly branched chain which may contain sulphur, oxygen or nitrogen atoms, one of the symbols R represents a hydrogen atom and the other represents a hydrogen atom or an alkyl group containing 1 to 4 carbon atoms, and that possibly, the products obtained are neutralised or partially neutralised with a mineral or organic base.

2. Products according to claim 1, in which the acid of formula (I) is thioglycolic, thiosalicylic or thiomalic acid.

3. Products according to claim 1 or 2, in which the base is an amino alcohol or an amine.

4. Products according to claim 1 or 2, in which the base is ammonia.

5. Products according to one of claims 1 to 4, in which the compound of formula (II) is a compound of the formula:

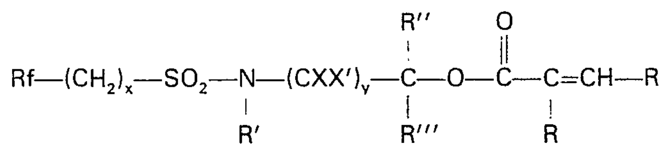 (III)

in which Rf and R have the same significance as in claim 1, x represents a whole number from 1 to 20, preferably equal to 2 or 4, y is a whole number from 1 to 4, preferably equal to 1 or 2, R' represents a hydrogen atom or an alkyl group containing 1 to 10 carbon atoms, a cycloalkyl group containing 5 to 12 carbon atoms, a hydroxyalkyl group containing 2 to 4 carbon atoms or an aryl group possibly substituted by an alkyl radical containing 1 to 6 carbon atoms, R'', R''', X and X' may be the same or different and represent hydrogen atoms or alkyl groups containing 1 to 4 carbon atoms.

6. Products according to one of claims 1 to 4, in which the compound of formula (II) is a compound of the formula:

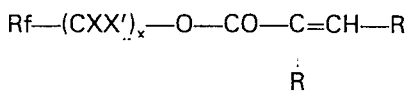

in which Rf, X, X', x and R have the same significance as in claims 1 and 5.

7. Products according to one of claims 1 to 6, in which the two R are hydrogen atoms.

8. Process for the preparation of the products according to one of claims 1 to 7, characterised in that 1 to 5 molecules of one or more compounds containing at least one ethylenic linkage, one of these compounds corresponding to the formula (II) such as defined in claim 1, are telomerised or cotelomerised with one molecule of one or more acids of formula (I) such as defined in claim 1, in the presence of an ionic or radical catalyst and are possibly neutralised or partially neutralised with a mineral or organic base.

9. Process for the preparation of the products according to one of claims 1 to 7, characterised in that one molecule of one or more acids of formula (I) such as defined in claim 1 and one molecule of the ethylenic compounds of formula (II) such as defined in claim 1, are condensed in the presence or not of a basic catalyst and possibly neutralised or partially neutralised with a mineral or organic base.

10. Process according to claim 8 or 9, characterised in that 0.01 to 5%, preferably 0.1 to 1.5%, of catalyst is used with respect to the weight of the ethylenic compounds engaged.

11. Process according to one of claims 8 to 10, characterised in that the reaction is effected at a pH between 2 and 11 inclusive and at a temperature between 40° and 120°C, preferably between 50° and 90°C.

12. The application of the products according to one of the claims 1 to 7 to the oil- and waterproofing of various substrates.

13. The application according to claim 12 characterised in that the substrates are papers cardboards, woods, leathers, fabrics, metals, masonries, glasses, porcelains, plastics and painted surfaces.

**Patentansprüche**

1. Fluorierte Produkte, erhalten aus der Kondensation oder Telomerisation eines Schwefels mit einer Verbindung, die mindestens eine äthylenische Bindung aufweist, dadurch gekennzeichnet, daß man

a) ein Molekül einer oder mehrerer Säuren der allgemeinen Formel:

$$HS—A—(COOH)_n \quad (I),$$

in der A einen aliphatischen oder aromatischen Kohlenwasserstoffrest und n eine ganze Zahl von 1 bis 4 bedeuten, und

b) 1 bis 5 Moleküle einer oder mehrerer Verbindung zur Umsetzung bringt, die mindestens eine äthylenische Bindung aufweisen, wobei mindestens eine dieser Verbindungen der allgemeinen Formel entspricht:

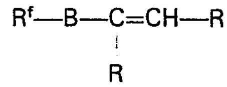 (II),

in der $R^f$ eine geradkettige oder verzweigte perfluorierte Kette mit 1 bis 20, vorzugsweise 2 bis 14, Kohlenstoffatomen, bedeutet, B eine gegebenenfalls verzweigte, zweiwertige Verknüpfung darstellt, die Schwefel-, Sauerstoff- oder Stickstoffatome aufweisen kann, eines der Symbole R ein Wasserstoffatom und das andere ein Wasserstoffatom oder eine Alkylgruppe mit 1 bis 4 Kohlenstoffatomen bedeutet, und daß man gegebenenfalls die erhaltenen Produkte mit einer mineralischen oder organischen Base neutralisiert oder teilweise neutralisiert.

2. Produkte nach Anspruch 1, wobei die Säure der Formel (I) die Thioglykolsäure, Thiosalycylsäure oder Thioäpfelsäure ist.

3. Produkte nach den Ansprüchen 1 oder 2, wobei die Base ein Aminoalkohol oder ein Amin ist.

4. Produkte nach den Ansprüchen 1 oder 2, wobei die Base Amoniak ist.

5. Produkte nach einem der Ansprüche 1 bis 4 wobei die Verbindung der Formel (II) eine Verbindung der Formel:

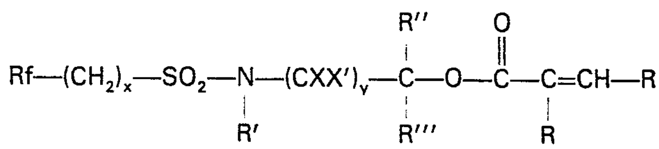 (III)

ist, in der $R^f$ und R die gleichen Bedeutungen wie in Anspruch 1 aufweisen, x eine ganze Zahl von 1 bis 20, vorzugsweise 2 oder 4 ist, y eine ganze Zahl von 1 bis 4, vorzugsweise 1 oder 2, ist R' eine Wasserstoffatom oder eine Alkylgruppe mit 1 bis 10 kohlenstoffatomen, Cycloalkyl mit 5 bis 12 Kohlenstoffatomen, Hydroxyalkyl mit 2 bis 4 Kohlenstoffatomen oder gegebenenfalls durch ein Alkylradikal mit 1 bis 6 Kohlenstoffatomen substituiertes Aryl ist, R'', R''', X und X' gleich oder verschieden sein können und Wasserstoffatome oder Alkylgruppen mit 1 bis 4 Kohlenstoffatomen bedeuten.

6. Produkte nach einem der Ansprüche 1 bis 4, wobei die Verbindung der Formel (II) eine Verbindung der Formel:

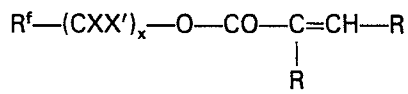

ist, in der $R^f$, X, X', x und R die gleichen Bedeutungen wie in den Ansprüchen 1 bis 5 haben.

7. Produkte nach einem der Ansprüche 1 bis 6, worin die beiden R Wasserstoffatome sind.

8. Verfahren zur Herstellung der Produkte nach einem der Ansprüche 1 bis 7, dadurch gekennzeichnet, daß man 1 bis 5 Moleküle einer oder mehrerer Verbindungen, die mindestens eine äthylenische Bindung besitzen und eine dieser Verbindungen der Formel (II), wie sie in Anspruch 1 definiert ist, entspricht, mit einem Molekül einer oder mehrerer Säuren der Formel (I) wie sie in Anspruch 1 definiert sind, in Anwesenheit eines ionischen oder radikalischen Katalysators telomerisiert oder kopolymerisiert und gegebenenfalls mit einer mineralischen oder organischen Base neutralisiert oder teilweise neutralisiert.

9. Verfahren zur Herstellung der Produkte nach einem der Ansprüche 1 bis 7, dadurch gekennzeichnet, daß man ein Molekül einer oder mehrerer Säuren der Formel (I) wie sie in Anspruch 1 definiert sind, und ein Molekül äthylenischer Verbindungen der Formel (II), wie sie in Anspruch 1 definiert sind, in An- oder Abwesenheit eines basischen Katalysator kondensiert und gegebenenfalls mit einer mineralischen oder organischen Base neutralisiert oder teilweise neutralisiert.

10. Verfahren nach einem der Ansprüche 8 oder 9, dadurch gekennzeichnet, daß man 0,01 bis 5%, vorzugsweise 0,1 bis 1,5%, Katalysator, bezogen auf das Gewicht der eingesetzten äthylenischen Verbindungen, verwendet.

11. Verfahren nach einem der Ansprüche 8 bis 10, dadurch gekennzeichnet, daß man die Umsetzung bei einem pH zwischen 2 und einschließlich 11 und bei einer Temperatur zwischen 40 und 120°C, vorzugsweise zwischen 50 und 90°C, durchführt.

12. Verwendung der Produkte nach einem der Ansprüche 1 bis 7 zum Öl- und Wasserabweisendmachen verschiedener Substrate.

13. Verwendung nach Anspruch 12, dadurch gekennzeichnet, daß die Substrat Papier, Karton, Holz, Leder, Gewebe, Metalle, Steine, Gläser, Porzellan, Kunststoffe und bemalte Oberflächen sind.